# FASCICULE DE BREVET EUROPEEN

(11) **EP 3 462 921 B1**
(45) Date de publication et mention de la délivrance du brevet: **29.07.2020**
(21) Numéro de dépôt: 17729529.2
(22) Date de dépôt: 22.05.2017
(51) Int. Cl.: A23N 17/00, A01K 5/00, A01K 5/01

(54) **APPAREIL DE PREPARATION D'ALIMENT POUR ANIMAUX**
TIERFUTTERZUBEREITUNGSVORRICHTUNG
APPARATUS FOR PREPARING ANIMAL FEED

(30) Priorité: 23.05.2016 FR 1654601
(43) Date de publication de la demande: 10.04.2019
(73) Titulaire: SEB S.A., 69130 Ecully (FR)
(72) Inventeur: MORIN, Gilles, 69290 Pollionay (FR); AVERTY, Lionel, 69570 Dardilly (FR); GOYON, Annabelle, 30980 Saint-Dionisy (FR)
(74) Mandataire: Soares, Luis Filipe
(86) Numéro de dépôt international: PCT/FR2017/051261
(87) Numéro de publication internationale: WO 2017/203152

(56) Documents cités:
- BE-A- 527 389
- DE-U1-202008 001 482
- FR-A1- 2 785 767
- GB-A- 2 016 291
- US-A1- 2009 173 282

## Description

La présente invention concerne de manière générale un appareil de préparation d'aliment pour animaux, destiné à aider un utilisateur à préparer une ration alimentaire pour son animal de compagnie, tel qu'un chien ou un chat par exemple.

Il est connu dans l'art antérieur des dispositifs de préparation d'aliment pour animaux domestiques, tels que celui décrit par exemple dans le document US8511519B2. En contrepartie, ce système présente notamment l'inconvénient de ne proposer que des aliments sous forme solide, ce qui peut ne pas convenir à certains animaux. Un autre dispositif est connu de US-2009/0173282-A1.

Un but de la présente invention est de répondre aux inconvénients de l'art antérieur mentionnés ci-dessus et en particulier, tout d'abord, de proposer un appareil de préparation d'aliment pour animaux, qui soit simple à utiliser, mais qui aide à préparer une ration alimentaire appétissante pour l'animal.

Pour cela un premier aspect de l'invention concerne un appareil de préparation d'aliment pour animaux, comprenant :
- des moyens de stockage d'un aliment déshydraté,
- des moyens de stockage d'un liquide tel que de l'eau,
- une enceinte de mélange agencée pour recevoir une portion d'aliment déshydraté et une portion de liquide,
- des moyens de mélange agencés de manière mobile dans l'enceinte de mélange pour mélanger la portion d'aliment déshydraté et la portion de liquide pour former une ration alimentaire sous forme de pâte,
- un récipient de consommation agencé pour recevoir la ration alimentaire, caractérisé en ce que :
- l'enceinte de mélange comprend un orifice,
- l'enceinte de mélange est montée mobile par rapport à l'appareil de préparation, pour aller d'une première position, ou position de mélange, dans laquelle l'orifice est en regard d'une zone de distribution en aliment déshydraté et en liquide, à une deuxième position, ou position de distribution, dans laquelle l'orifice est en regard du récipient de consommation. L'appareil de préparation selon la présente invention permet de préparer automatiquement des aliments pour animaux sous forme de pâte ou de pâtée. En effet, l'appareil mélange automatiquement le liquide et l'aliment déshydraté jusqu'à obtenir une pâte, et délivre la pâte ou pâtée automatiquement dans le récipient de consommation sans intervention de l'utilisateur. De plus, l'appareil reste simple, car un seul orifice est nécessaire dans l'enceinte de mélange pour recevoir les ingrédients et distribuer la pâtée obtenue, car c'est l'enceinte de mélange qui est mobile par rapport à l'appareil de préparation, pour présenter l'orifice soit en regard de la zone de distribution pour recevoir les ingrédients de base (liquide et aliment déshydraté), soit en regard du récipient de consommation (qui peut être une gamelle) pour distribuer la pâtée à l'animal.

Avantageusement, l'orifice, lorsque l'enceinte de mélange est dans la première position, est situé en partie supérieure de l'enceinte de mélange, et l'orifice, lorsque l'enceinte de mélange est dans la deuxième position, est situé en partie inférieure de l'enceinte de mélange. L'invention tire avantageusement parti de la force de gravité pour recevoir les ingrédients et distribuer la pâtée obtenue.

Avantageusement, l'enceinte de mélange est mobile en rotation autour d'un axe de rotation.

Avantageusement, les moyens de mélange comprennent une pale de mélange.

Avantageusement, la pale de mélange est mobile en rotation autour du même axe de rotation que l'enceinte de mélange. L'enceinte de mélange étant mobile en rotation par rapport à l'appareil présente donc une symétrie de révolution, et rendre la pale de mélange mobile en rotation procure une synergie pour mélanger efficacement les ingrédients contenus dans l'enceinte de mélange.

Avantageusement, la pale de mélange est agencée pour guider les ingrédients de l'enceinte de mélange vers une extrémité de l'enceinte de mélange opposée à l'orifice lorsqu'elle pivote selon un premier sens de rotation, et la pale de mélange est agencée pour guider les ingrédients de l'enceinte de mélange vers l'orifice lorsqu'elle pivote selon un deuxième sens de rotation. Cette mise en œuvre minimise la complexité de l'appareil, car la pale de mélange cumule les fonctions :
- en tournant dans le premier sens de rotation, elle éloigne les ingrédients qui viennent d'être introduits dans l'enceinte de mélange de l'orifice de l'enceinte de mélange alors dans la première position, ce qui évite de boucher ou obstruer l'orifice,
- elle mélange les ingrédients entre eux,
- en tournant dans le deuxième sens de rotation, elle ramène les ingrédients mélangés vers l'orifice de l'enceinte de mélange alors dans la deuxième position, et permet de pousser au travers de l'orifice la pâtée, pour que cette dernière se déverse dans le récipient de consommation.

Avantageusement, l'appareil de préparation comprend un canal d'approvisionnement en liquide, avec une extrémité aval agencée au dessus de l'orifice lorsque l'enceinte de mélange est en première position, de sorte à faire couler le liquide dans l'enceinte de mélange sans contact avec la zone de distribution et/ou l'orifice. L'extrémité aval du canal d'approvisionnement est agencée pour que le filet ou jet de liquide tombe directement dans l'enceinte de mélange sans toucher, ni couler ou ruisseler sur les parois de la zone de distribution ou celles de l'enceinte de mélange. La chute se fait par gravité et les parois ne sont pas mouillées, ce qui évite que de l'aliment déshydraté ou des poussières ne collent aux parois.

Avantageusement, l'appareil de préparation comprend des moyens d'approvisionnement de l'enceinte de mélange en aliment déshydraté, avec une bouche d'alimentation en aliment déshydraté agencée pour faire tomber de l'aliment déshydraté par l'orifice dans l'enceinte de mélange en première position, et la bouche d'alimentation et l'extrémité aval du canal d'approvisionnement en liquide sont décalées et distantes l'une de l'autre de sorte à permettre une alimentation simultanée de l'enceinte de mélange en liquide et en aliment déshydraté, sans contact entre le liquide et l'aliment déshydraté au niveau de la zone de distribution et/ou de l'orifice. Aucun contact entre le liquide et l'aliment déshydraté ne se produit avant que ces ingrédients soient complétement dans l'enceinte de mélange. Ainsi la zone de distribution et les parois de l'enceinte de mélange adjacentes restent propres.

Avantageusement, les moyens d'approvisionnement de l'enceinte de mélange en aliment déshydraté comprennent une vis d'alimentation agencée entre les moyens de stockage d'aliment déshydraté et la bouche d'alimentation. Une telle vis d'alimentation, avec un filet en hélice par exemple, permet de doser aisément et précisément le volume d'aliment déshydraté en fonction du nombre de tours de vis.

Avantageusement, la zone de distribution comprend des parois inclinées agencées pour recentrer l'aliment déshydraté et le guider vers l'orifice de l'enceinte de mélange en première position.

Avantageusement, l'appareil de préparation comprend des moyens de stockage d'un complément alimentaire, en particulier sous forme liquide. Un tel complément alimentaire permet de fournir des vitamines, des produits de santé, de manière ponctuelle, planifiée (tous les 2 ou 3 repas ou une fois par semaine par exemple), ou selon un besoin particulier.

Avantageusement, le complément alimentaire est contenu dans une cartouche amovible. Cela permet de choisir, varier et adapter facilement les compléments alimentaires à ajouter à l'aliment déshydraté de base.

Avantageusement, la cartouche amovible comprend un piston, et l'appareil comprend des moyens de poussée, agencés pour déplacer le piston d'une distance prédéterminée. Un tel dosage en volume est aisé à mettre en place.

Avantageusement, la cartouche amovible comprend une sortie agencée au dessus de l'orifice de l'enceinte de mélange dans la première position, et la sortie de la cartouche amovible, la bouche d'alimentation et l'extrémité aval du canal d'approvisionnement en liquide sont décalées et distantes les unes des l'autres, de sorte à permettre une alimentation simultanée de l'enceinte de mélange en complément alimentaire et en liquide et/ou en aliment déshydraté, sans contact entre le complément alimentaire et le liquide et/ou l'aliment déshydraté au niveau de la zone de distribution et/ou de l'orifice. Ainsi la zone de distribution et les parois de l'enceinte de mélange adjacentes restent propres.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une pale de mélange agencée pour être reçue dans une enceinte de mélange d'un appareil de préparation selon la présente invention, vue de côté ;
- la figure 2 représente la pale de mélange de la figure 1, vue selon la direction II de la figure 1 ;
- la figure 3 représente la pale de mélange de la figure 1, vue selon la direction III de la figure 1 ;
- la figure 4 représente une coupe de la pale de mélange de la figure 1, selon l'axe IV-IV de la figure 1 ;
- la figure 5a représente la pale de mélange de la figure 1 placée dans l'enceinte de mélange de l'appareil de préparation selon la présente invention ;
- la figure 5b représente un pot faisant partie de l'enceinte de mélange de la figure 5a ;
- la figure 6 représente une vue en perspective d'un appareil de préparation d'aliment pour animaux selon la présente invention accueillant l'enceinte de mélange de la figure 5a ;
- la figure 7 représente une coupe de l'appareil de préparation d'aliment pour animaux de la figure 6 ;
- la figure 8 représente une vue en perspective de dessous d'un logement de l'appareil de préparation de la figure 6 ;
- la figure 9 représente une vue en perspective d'une zone de distribution de l'appareil de préparation de la figure 6 ;
- la figure 10 représente une vue de l'arrière de l'appareil de préparation de la figure 6 ;
- la figure 11 représente une vue éclatée de l'appareil de préparation de la figure 6 ;
- la figure 12 représente une vue détaillant une cartouche amovible de l'appareil de préparation de la figure 6.

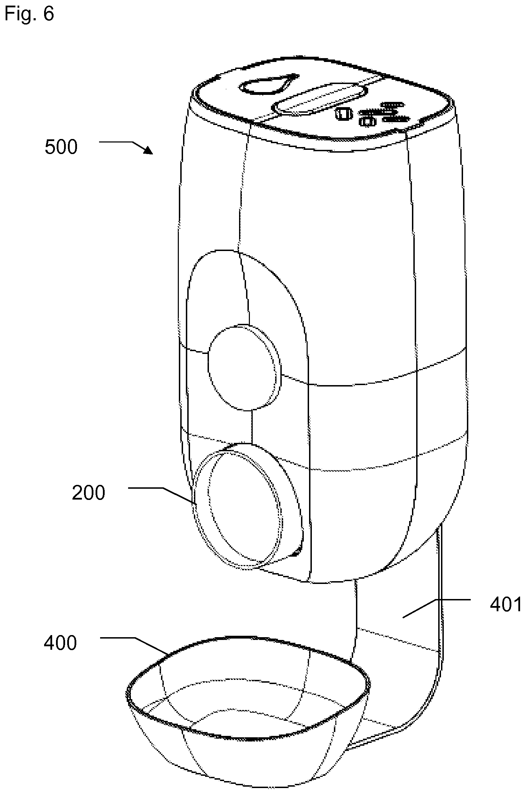

Les figures 6, 10, 11, et 12 représentent des vues générales d'un appareil de préparation 500 selon la présente invention, qui comporte un corps principal soutenu par une équerre 401, qui soutient également un récipient de consommation 400 (une gamelle par exemple).

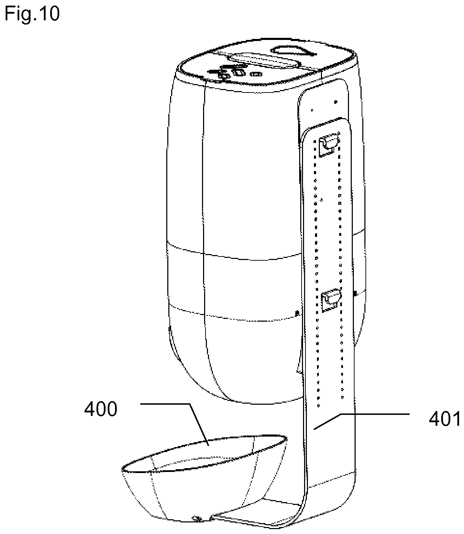

La figure 10 montre que le corps principal peut être positionné selon différentes altitudes par rapport à l'équerre 401, de sorte à pouvoir ajuster une hauteur entre le corps principal et le récipient de consommation 400, en fonction de la taille de l'animal à nourrir. A cet effet, une pluralité de trous sont prévus dans l'équerre 401, afin de pouvoir la visser à l'altitude adéquate dans des trous taraudés du corps principal. L'équerre 401 est quant à elle fixée à un mur par exemple pour maintenir en place l'appareil de préparation 500 et le récipient de consommation 400.

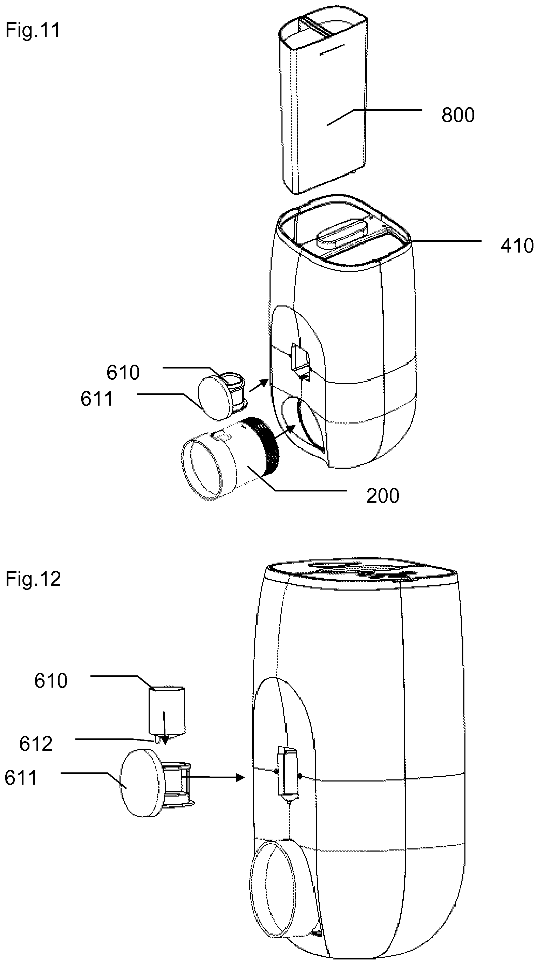

La figure 11 montre que l'appareil de préparation 500 peut recevoir de manière amovible plusieurs éléments dont un réservoir de liquide 800, une cartouche amovible 610 et une enceinte de mélange 200 dans laquelle sont mélangés au moins un liquide (de l'eau par exemple) et un aliment déshydraté pour former une ration alimentaire sous forme de pâtée qui sera ensuite distribuée dans le récipient de consommation 400. Un bac 410 est également prévu dans le corps de l'appareil de préparation 500, pour servir de moyens de stockage pour l'aliment déshydraté.

L'appareil de préparation 500 peut également recevoir de manière amovible la cartouche amovible 610 et son support 611, dont le montage extrêmement simple est montré figure 12. En effet, la cartouche amovible 610, qui contient un complément alimentaire à inclure si besoin dans les ingrédients à mélanger, peut être montée dans son support 611, et le sous-ensemble est ensuite encliqueté ou inséré dans le corps principal de l'appareil de préparation 500, au dessus de l'enceinte de mélange, pour pouvoir aisément inclure une quantité définie de complément alimentaire à la ration alimentaire pour l'animal, comme cela sera expliqué ultérieurement.

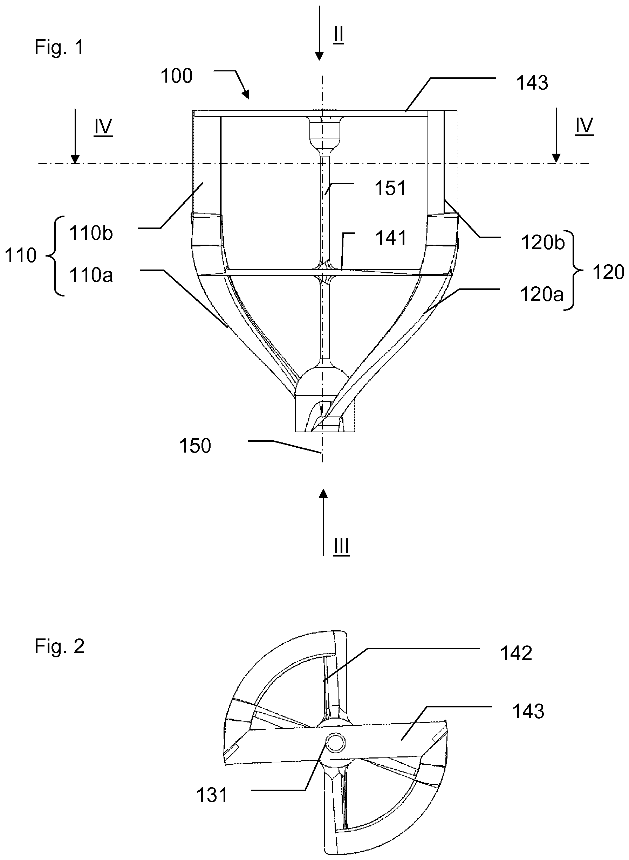

La figure 1 représente une pale de mélange 100 agencée pour être reçue dans l'enceinte de mélange 200 de l'appareil de préparation 500 selon la présente invention, qui comprend un premier bras excentré 110 et un deuxième bras excentré 120, tous deux excentrés par rapport à un axe de rotation 150, autour duquel la pale de mélange tourne lors de son utilisation dans l'appareil de préparation 500 d'aliment pour animaux.

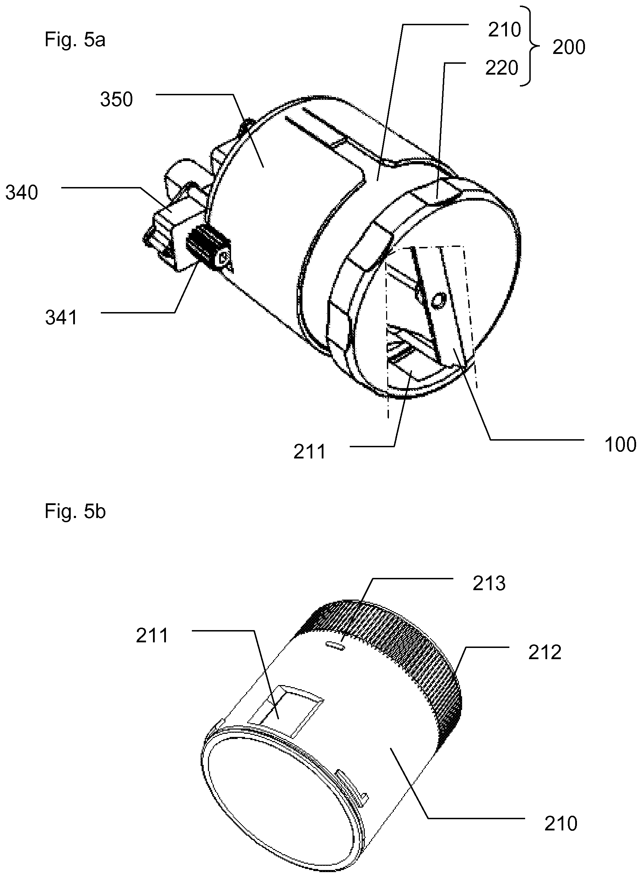

En effet, la pale de mélange 100 est agencée pour être reçue dans l'enceinte de mélange 200 (visible figures 5a, 6, 7 et 11) de l'appareil de préparation 500 (visible figure 6) d'aliment pour animaux, afin d'y mélanger des ingrédients tels qu'une portion d'un aliment déshydraté avec un liquide. A cet effet, il est prévu d'entraîner la pale de mélange 100 en rotation autour de l'axe de rotation 150, afin de mélanger tout d'abord l'aliment déshydraté avec un liquide tel que de l'eau, puis de malaxer ce mélange pour obtenir une pâte homogène, et la distribuer ensuite dans le récipient de consommation 400 (visible figure 6) accessible à l'animal pour qu'il puisse consommer cette pâtée tout juste préparée.

Pour revenir à la figure 1, chaque bras excentré 110 et 120 comprend une première portion 110a et 120a respectivement, inclinée par rapport à un plan contenant l'axe de rotation 150, afin de provoquer un mouvement des ingrédients contenus dans l'enceinte de mélange le long d'une première direction axiale (la direction II de la figure 1) lorsque la pale de mélange tourne dans un premier sens de rotation. Avantageusement, les premières portions 110a et 120a sont de forme hélicoïdale pour former une portion de vis d'Archimède. Ainsi, lorsque la pale de mélange tourne dans un deuxième sens de rotation opposé au premier sens de rotation, les premières portions 110a et 120a provoquent un mouvement des ingrédients contenus dans l'enceinte de mélange le long d'une deuxième direction axiale, la direction III de la figure 1.

De plus, chaque bras excentré 110 et 120 comprend une deuxième portion 110b et 120b respectivement, agencée en amont de la première portion 110a et 120a par rapport à la première direction axiale II, présentant une section transversale orientée radialement par rapport à l'axe de rotation 150 pour, lorsque la pale de mélange 100 tourne dans un deuxième sens de rotation, provoquer un mouvement radial vers l'extérieur de l'enceinte de mélange 200 des ingrédients contenus dans l'enceinte de mélange 200 et qui sont alors ramenés vers la deuxième portion 110b et 120b par la première portion 110a et 120a.

En effet, l'invention propose de faire tourner la pale de mélange 100 selon deux sens de rotation contraires, en fonction du résultat à atteindre, comme cela est expliqué ci-dessous.

Comme montré figure 5a, l'enceinte de mélange 200 comprend un pot 210 fermé par un couvercle 220, la pale de mélange 100 étant agencée dans le pot 210 fermé par le couvercle 220. L'enceinte de mélange 200 comprend également un orifice 211 montré à travers le couvercle 220 par une coupe partielle. Comme on le voit figure 5a et 5b, l'orifice 211 est formé dans le pot, mais on peut envisager d'implanter l'orifice 211 dans le couvercle.

L'appareil de préparation 500 comprend un motoréducteur 340 avec un pignon 341 qui peut faire pivoter l'enceinte de mélange 200 lorsqu'elle est placée dans un logement 350 de l'appareil de préparation 500. Dans la suite de l'exposé, on considérera que le fond du pot 210 forme une première extrémité de l'enceinte de mélange 200, et le couvercle 220 est alors placé à une deuxième extrémité de l'enceinte de mélange 200.

Dans une première position, l'enceinte de mélange 200 est placée dans le logement 350 avec l'orifice 211 en haut de l'enceinte de mélange 200, de telle sorte que les ingrédients (l'aliment déshydraté, le liquide et un éventuel complément alimentaire) tombent par gravité dans l'enceinte de mélange 200, du côté de la deuxième extrémité donc.

Lors d'une première phase de préparation, il est donc prévu de faire tourner la pale de mélange 100 dans un premier sens de rotation pour que les ingrédients soient poussés ou déplacés par les premières portions 110a et 120a vers la première extrémité de l'enceinte de mélange 200 (selon la direction II de la figure 1 donc) pour éviter une accumulation des ingrédients au niveau de l'orifice 211.

Cette première phase de préparation peut durer plusieurs minutes, le temps de repousser les ingrédients vers le fond du pot 210 et les y mélanger et malaxer pour obtenir une pâte ou pâtée homogène et prête à consommer par l'animal. On peut également prévoir de stopper temporairement la rotation pour permettre au liquide de bien pénétrer l'aliment déshydraté. Pour mélanger efficacement les ingrédients, les premières portions 110a et 120a ont une section transversale allongée qui est sensiblement perpendiculaire à leur direction de déplacement, mais la longueur de cette section transversale est limitée à par exemple 12mm et plus particulièrement à 10mm, pour éviter tout encrassement autour de la pale de mélange. De plus, cette section transversale peut présenter une surface minimale de 20mm², ce qui lui confère une résistance adéquate.

On peut prévoir de fabriquer la pale de mélange 100 en acrylonitrile butadiène styrène ou ABS, en poly(oxyméthylène) (ou polyformaldéhyde), de sigle POM, ou encore en polyamide de sigle PA. On peut bien entendu prévoir d'ajouter des fibres de renfort dans la matière.

Une deuxième phase de préparation peut alors débuter, pour distribuer la pâtée dans le récipient de consommation 400. A cet effet, le motoréducteur 340, par l'intermédiaire du pignon 341 qui s'engage avec une portion dentée 212 du pot 210 (visible figure 5b), fait pivoter l'enceinte de mélange 200 dans le logement 350, pour amener l'orifice 211 en bas de l'enceinte de mélange.

A ce moment, en faisant tourner la pale de mélange 100 dans un deuxième sens de rotation (opposé au premier sens de rotation de la première phase de préparation), alors les ingrédients sont ramenés par les premières portions 110a et 120a vers la deuxième extrémité de l'enceinte de mélange, c'est-à-dire vers les deuxièmes portions 110b et 120b, situées en regard de l'orifice 211.

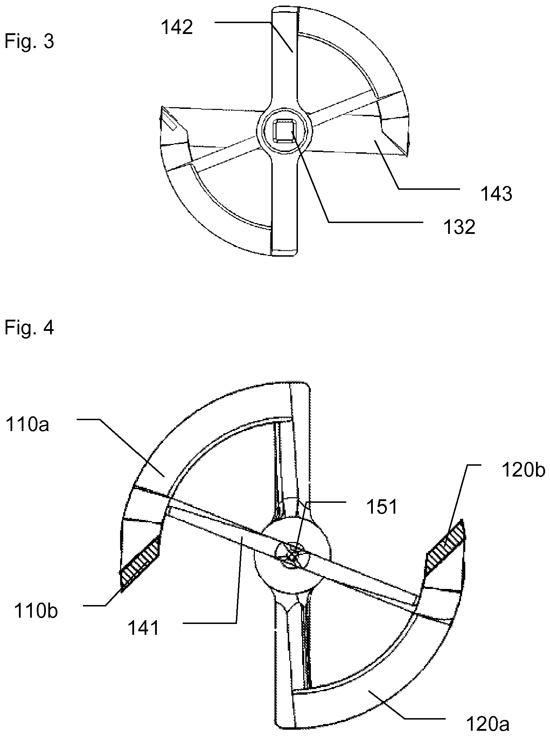

La section orientée des deuxièmes portions 110b et 120b, comme on peut le voir figure 4, a alors pour effet de repousser les ingrédients vers l'extérieur de l'enceinte de mélange, et de faire donc passer la pâtée par l'orifice 211, pour tomber par gravité dans le récipient de consommation 400 situé juste en dessous. La longueur des deuxièmes portions 110b et 120b est calculée pour qu'au moins une partie de ces deuxièmes portions 110b et 120b soient en regard de l'orifice 211.

Lorsqu'elle tourne dans le premier sens de rotation, la pale de mélange 100 a donc pour effet de déplacer les ingrédients vers la première extrémité de l'enceinte de mélange 200 et les y mélanger, et lorsqu'elle tourne dans le deuxième sens de rotation, la pale de mélange 100 a donc pour effet de déplacer les ingrédients vers la deuxième extrémité de l'enceinte de mélange 200 et les pousser au travers de l'orifice 211.

Comme visible figure 5a, les deuxièmes portions 110b et 120b sont ajustées au diamètre du pot 210, et afin de limiter les risques de coincement si des grains ou particules solides se trouvent dans la pâtée entre la pale de mélange 100 et le pot 210, il est prévu que les deuxièmes portions 110b et 120b soient au moins en partie souples, pour pouvoir se déformer, et "passer par-dessus ces grains ou particules solides". On peut donc prévoir une partie en silicone sur les deuxièmes portions 110b et 120b.

Comme représenté sur les figures 1, 2 et 3, la pale de mélange 100 comprend des pattes de liaison entre les bras excentrés 110 et 120 afin de procurer une bonne rigidité à la pale de mélange 100. En particulier, deux bras radiaux 142 et 143 sont prévus aux extrémités de la pale de mélange 100, pour joindre les bras excentrés 110 et 120 et une partie centrale de la pale de mélange 100.

De plus, une patte radiale 141 est prévue au centre de la pale de mélange 100, et une patte longitudinale 151 est prévue au niveau de l'axe de rotation 150 pour encore rigidifier l'ensemble et éviter les déformations par torsion ou flexion, qui pourraient conduire à un blocage de la pale de mélange 100 dans l'enceinte de mélange 200.

La figure 2 montre de plus un centrage 131 (un alésage) qui forme un ancrage pour assurer une liaison pivot de qualité avec l'enceinte de mélange 200 où un pion correspondant est agencé dans le couvercle 220.

La figure 3 montre enfin un carré d'entraînement 132 qui est agencé pour former un autre ancrage et s'engager avec un entraîneur de l'appareil de préparation 500, situé au fond du logement 350. On peut prévoir toute autre forme asymétrique à la place du carré d'entraînement 132 pour assurer l'entraînement de la pale de mélange 100, il suffit simplement une forme avec un blocage en rotation.

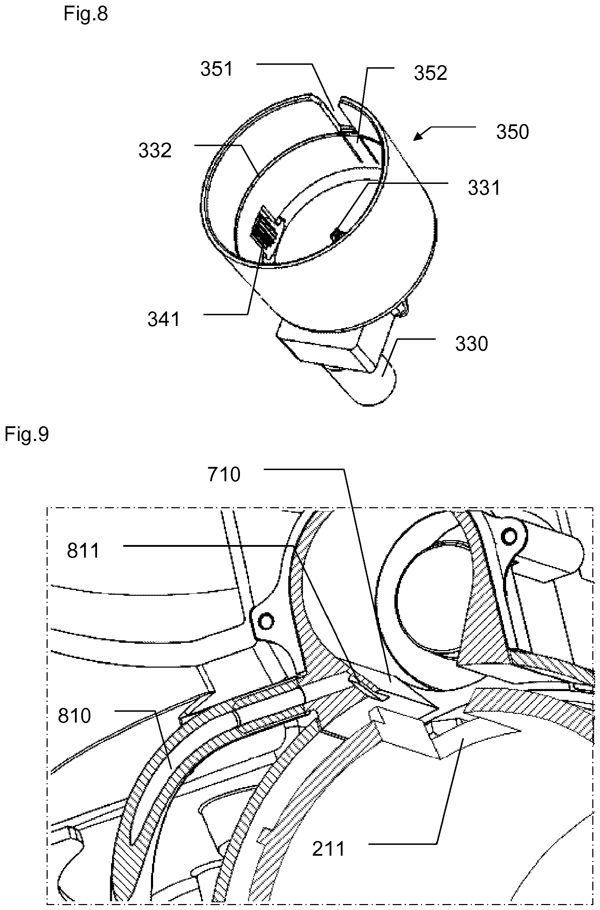

La figure 8 représente une vue en perspective de dessous du logement 350 de l'appareil de préparation 500. On y retrouve le motoréducteur 340 et son pignon 341, mais également un motoréducteur 330 agencé pour entraîner en rotation la pale de mélange 100 via un entraîneur 331 visible au fond du logement 350.

On voit aussi une fente 351 ménagée dans la paroi cylindrique du logement 350, pour laisser passer un ergot 213 (visible figure 5b) du pot 210, afin de garantir que l'orifice 211 se trouve en partie supérieure de l'enceinte de mélange 200, dès sa mise en place dans ou sur l'appareil de préparation 500.

La fente 351 se termine sur une languette ou patte flexible 352 qui comprend une portion d'une gorge 332 qui est agencée sur 360° sur la face interne du logement 350.

Lors de l'insertion de l'enceinte de mélange sur l'appareil de préparation 500, l'ergot 213 est donc guidé par la fente 351, et soulève la patte flexible 352, pour arriver dans la gorge 332. L'enceinte de mélange est donc solidaire du logement 350, l'orifice 211 étant en partie supérieure. La première phase de préparation peut commencer avec alimentation des ingrédients par gravité dans l'enceinte de mélange 200 et mélange avec la pale de mélange 100 qui tourne dans le premier sens de rotation.

Ensuite, la pale de mélange est stoppée, et l'enceinte de mélange 200 est pivotée par le motoréducteur 340 pour faire passer l'orifice 211 en partie inférieure de l'enceinte de mélange 200. Ce mouvement est permis et guidé par la gorge 332 qui accueille l'ergot 213.

L'enceinte de mélange 200 est stoppée en position de distribution, avec l'orifice 211 en position basse, la pale de mélange peut alors être mise en rotation selon le deuxième sens de rotation, pour expulser les ingrédients sous forme de pâtée par l'orifice 211. Ce dernier présente des bords biseautés pour éviter que la pâtée ne reste accrochée sur les bords de l'orifice 211.

Enfin, une fois l'enceinte de mélange 200 vide, la pale de mélange 100 peut à nouveau être stoppée, et l'enceinte de mélange 200 peut à nouveau être pivotée pour repasser en position de mélange. Une nouvelle préparation peut être lancée, ou l'enceinte de mélange 200 peut être retirée par l'utilisateur, car en saisissant la portion externe de l'enceinte de mélange 200 au capot (le couvercle 220 par exemple), la patte flexible peut libérer l'ergot 213.

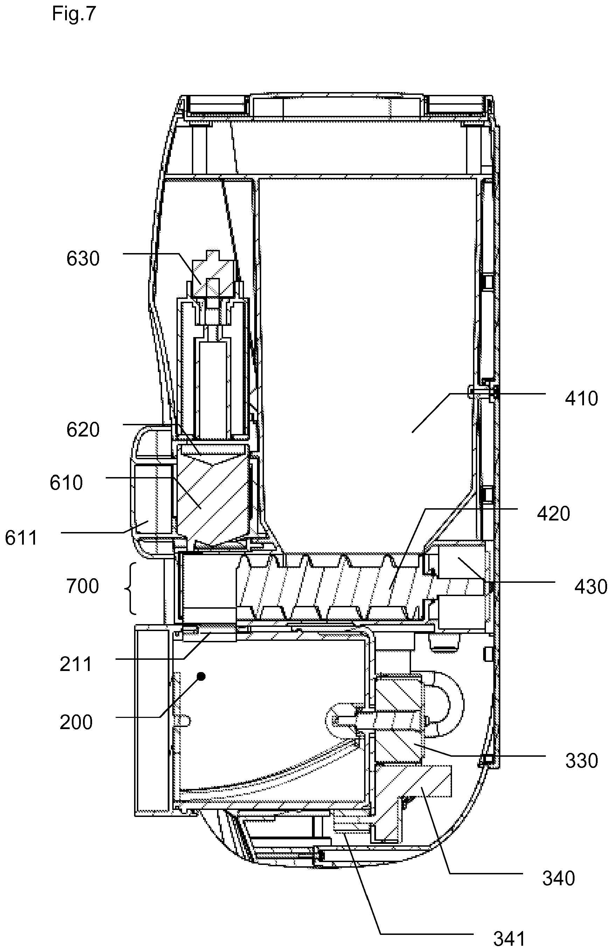

De retour à la figure 7, on peut voir le bac 410 qui forme des moyens de stockage de l'aliment déshydraté, avec une vis 420, qui peut être une vis hélicoïdale, accouplée à un moteur électrique 430, qui peut être un motoréducteur. La vis 420 est donc agencée pour prélever de l'aliment déshydraté dans le bac 410, et le transporter jusqu'à une zone de distribution 700, au dessus de l'orifice 211 (car l'enceinte de mélange 200 est dans la première position).

On voit aussi figure 7 la cartouche amovible 610 positionnée au dessus de la zone de distribution 700, et qui contient un complément alimentaire tel que des vitamines, des oligoéléments, des produits de santé (un produit vermifuge par exemple), afin de personnaliser et adapter la ration alimentaire à préparer, en fonction des besoins de l'animal. La cartouche amovible 610 contient un complément alimentaire idéalement sous forme liquide ou pâteuse, et l'appareil de préparation 500 comprend un moteur 630 agencé pour déplacer un piston 620, afin de forcer une quantité prédéterminée de complément alimentaire à tomber dans l'enceinte de mélange 200.

La cartouche amovible 610 est montée sur le support 611 qui permet de la recevoir et l'indexer via un pion d'indexage 612 (visible figure 12), pour la positionner correctement dans l'appareil de préparation 500.

Comme on le voit figure 11, l'appareil de préparation 500 comprend le réservoir de liquide 800, agencé pour former des moyens de stockage de liquide, et stocker de l'eau par exemple. Le réservoir de liquide 800 est monté amovible pour pouvoir être aisément rempli, lavé ou séché.

Le réservoir de liquide 800 est relié à un canal d'approvisionnement 810 dont on voit une extrémité aval 811 sur la figure 9. On voit sur cette figure en coupe une partie de l'orifice 211 et des parois 710 qui définissent la zone de distribution 700. L'extrémité aval 811 du canal d'approvisionnement 810 est donc positionnée au dessus de l'orifice 211, mais elle est aussi décalée par rapport aux parois 710, pour éviter tout contact ou ruissellement de l'eau sur les parois 710 de la zone de distribution, mais aussi avec les parois de l'orifice 211, ce qui évitera à l'aliment déshydraté de coller et salir ces parois. L'extrémité aval 811 est donc en regard de l'orifice 211, et elle est décalée par rapport à l'alimentation en aliment déshydraté et en complément alimentaire pour que ces trois ingrédients puissent être introduits en même temps dans l'enceinte de mélange 200 sans contact entre eux, pour éviter les salissures de la zone de distribution 700, qui n'est pas démontable.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Appareil de préparation (500) d'aliment pour animaux, comprenant :
- des moyens de stockage d'un aliment déshydraté,
- des moyens de stockage d'un liquide tel que de l'eau,
- une enceinte de mélange (200) agencée pour recevoir une portion d'aliment déshydraté et une portion de liquide,
- des moyens de mélange agencés de manière mobile dans l'enceinte de mélange (200) pour mélanger la portion d'aliment déshydraté et la portion de liquide pour former une ration alimentaire sous forme de pâte,
- un récipient de consommation (400) agencé pour recevoir la ration alimentaire,
**caractérisé en ce que** :
- l'enceinte de mélange (200) comprend un orifice (211),
- l'enceinte de mélange (200) est montée mobile par rapport à l'appareil de préparation (500), pour aller d'une première position, ou position de mélange, dans laquelle l'orifice (211) est en regard d'une zone de distribution (700) en aliment déshydraté et en liquide, à une deuxième position, ou position de distribution, dans laquelle l'orifice (211) est en regard du récipient de consommation (400).

2. Appareil de préparation (500) selon la revendication précédente, dans lequel l'orifice (211), lorsque l'enceinte de mélange (200) est dans la première position, est situé en partie supérieure de l'enceinte de mélange (200), et dans lequel l'orifice (211), lorsque l'enceinte de mélange (200) est dans la deuxième position, est situé en partie inférieure de l'enceinte de mélange (200).

3. Appareil de préparation (500) selon l'une des revendications précédentes, dans lequel l'enceinte de mélange (200) est mobile en rotation autour d'un axe de rotation (150).

4. Appareil de préparation (500) selon l'une des revendications précédentes, dans lequel les moyens de mélange comprennent une pale de mélange (100).

5. Appareil de préparation (500) selon la revendication précédente dans sa dépendance à la revendication 3, dans lequel la pale de mélange (100) est mobile en rotation autour du même axe de rotation que l'enceinte de mélange (200).

6. Appareil de préparation (500) selon la revendication précédente, dans lequel la pale de mélange (100) est agencée pour guider les ingrédients de l'enceinte de mélange (200) vers une extrémité de l'enceinte de mélange (200) opposée à l'orifice (211) lorsqu'elle pivote selon un premier sens de rotation, et dans lequel la pale de mélange (100) est agencée pour guider les ingrédients de l'enceinte de mélange (200) vers l'orifice (211) lorsqu'elle pivote selon un deuxième sens de rotation.

7. Appareil de préparation (500) selon l'une des revendications précédentes, comprenant un canal d'approvisionnement (810) en liquide, avec une extrémité aval (811) agencée au dessus de l'orifice (211) lorsque l'enceinte de mélange (200) est en première position, de sorte à faire couler le liquide dans l'enceinte de mélange (200) sans contact avec la zone de distribution (700) et/ou l'orifice (211).

8. Appareil de préparation (500) selon la revendication précédente, comprenant des moyens d'approvisionnement de l'enceinte de mélange (200) en aliment déshydraté, avec une bouche d'alimentation en aliment déshydraté agencée pour faire tomber de l'aliment déshydraté par l'orifice (211) dans l'enceinte de mélange (200) en première position, et dans lequel la bouche d'alimentation et l'extrémité aval (811) du canal d'approvisionnement (810) en liquide sont décalées et distantes l'une de l'autre de sorte à permettre une alimentation simultanée de l'enceinte de mélange (200) en liquide et en aliment déshydraté, sans contact entre le liquide et l'aliment déshydraté au niveau de la zone de distribution (700) et/ou de l'orifice (211).

9. Appareil de préparation (500) selon la revendication précédente, dans lequel les moyens d'approvisionnement de l'enceinte de mélange (200) en aliment déshydraté comprennent une vis (420) d'alimentation agencée entre les moyens de stockage d'aliment déshydraté et la bouche d'alimentation.

10. Appareil de préparation (500) selon la revendication précédente, dans lequel la zone de distribution (700) comprend des parois (710) inclinées agencées pour recentrer l'aliment déshydraté et le guider vers l'orifice (211) de l'enceinte de mélange (200) en première position.

11. Appareil de préparation (500) selon l'une des revendications précédentes, comprenant des moyens de stockage d'un complément alimentaire, en particulier sous forme liquide.

12. Appareil de préparation (500) selon la revendication précédente, dans lequel le complément alimentaire est contenu dans une cartouche amovible (610).

13. Appareil de préparation (500) selon la revendication précédente, dans lequel la cartouche amovible (610) comprend un piston (620), et dans lequel l'appareil comprend des moyens de poussée, agencés pour déplacer le piston (620) d'une distance prédéterminée.

14. Appareil de préparation (500) selon l'une des revendications 9 à 10 dans leur dépendance à la revendication 7, dans lequel la cartouche amovible (610) comprend une sortie agencée au dessus de l'orifice (211) de l'enceinte de mélange (200) dans la première position, et dans lequel la sortie de la cartouche amovible (610), la bouche d'alimentation et l'extrémité aval (811) du canal d'approvisionnement (810) en liquide sont décalées et distantes les unes des l'autres, de sorte à permettre une alimentation simultanée de l'enceinte de mélange (200) en complément alimentaire et en liquide et/ou en aliment déshydraté, sans contact entre le complément alimentaire et le liquide et/ou l'aliment déshydraté au niveau de la zone de distribution (700) et/ou de l'orifice (211).

## Patentansprüche

1. Gerät zur Zubereitung (500) von Futter für Tiere, umfassend:
- Mittel zum Lagern eines dehydrierten Futters,
- Mittel zum Lagern einer Flüssigkeit wie Wasser,
- eine Mischkammer (200), die angeordnet ist, um einen Teil des dehydrierten Futters und einen Teil der Flüssigkeit aufzunehmen,
- Mischmittel, die beweglich in der Mischkammer (200) angeordnet sind, um den Teil des dehydrierten Futters und den Teil der Flüssigkeit zu mischen, um eine Futterration in Form eines Breis zu bilden,
- einen Verbrauchsbehälter (400), der zur Aufnahme der Futterration angeordnet ist,
**dadurch gekennzeichnet, dass**:
- die Mischkammer (200) eine Öffnung (211) umfasst,
- die Mischkammer (200) relativ zu dem Gerät zur Zubereitung (500) beweglich angebracht ist, um von einer ersten Position oder Mischposition, in der sich die Öffnung (211) gegenüber einer Verteilungszone (700) für dehydriertes Futter und Flüssigkeiten befindet, in eine zweite Position oder Verteilungsposition zu gehen, in der sich die Öffnung (211) gegenüber dem Verbrauchsbehälter (400) befindet.

2. Gerät zur Zubereitung (500) nach dem vorhergehenden Anspruch, wobei sich die Öffnung (211) im oberen Teil der Mischkammer (200) befindet, wenn sich die Mischkammer (200) in der ersten Position befindet, und wobei sich die Öffnung (211) im unteren Teil der Mischkammer (200) befindet, wenn sich die Mischkammer (200) in der zweiten Position befindet.

3. Gerät zur Zubereitung (500) nach einem der vorhergehenden Ansprüche, wobei die Mischkammer (200) um eine Drehachse (150) drehbar ist.

4. Gerät zur Zubereitung (500) nach einem der vorhergehenden Ansprüche, wobei die Mischmittel eine Mischschaufel (100) umfassen.

5. Gerät zur Zubereitung (500) nach dem vorhergehenden Anspruch abhängig von Anspruch 3, wobei die Mischschaufel (100) um die gleiche Drehachse wie die Mischkammer (200) drehbar ist.

6. Gerät zur Zubereitung (500) nach dem vorhergehenden Anspruch, wobei die Mischschaufel (100) angeordnet ist, um die Bestandteile von der Mischkammer (200) zu einem Ende der Mischkammer (200) gegenüber der Öffnung (211) zu führen, wenn sie in einer ersten Drehrichtung geschwenkt wird, und wobei die Mischschaufel (100) angeordnet ist, um die Bestandteile von der Mischkammer (200) zu der Öffnung (211) zu führen, wenn sie in einer zweiten Drehrichtung geschwenkt wird.

7. Gerät zur Zubereitung (500) nach einem der vorhergehenden Ansprüche, umfassend einen Flüssigkeitsversorgungskanal (810) mit einem stromabwärtigen Ende (811), das über der Öffnung (211) angeordnet ist, wenn sich die Mischkammer (200) in der ersten Position befindet, damit die Flüssigkeit ohne Kontakt mit der Verteilungszone (700) und/oder der Öffnung (211) in die Mischkammer (200) fließt.

8. Gerät zur Zubereitung (500) nach dem vorhergehenden Anspruch, umfassend Mittel zur Versorgung der Mischkammer (200) mit dehydriertem Futter, mit einem Zufuhranschluss für dehydriertes Futter, der angeordnet ist, um dehydriertes Futter durch die Öffnung (211) in die Mischkammer (200) in der ersten Position fallen zu lassen, und wobei der Zufuhranschluss und das stromabwärtige Ende (811) des Flüssigkeitsversorgungskanals (810) versetzt und voneinander entfernt sind, um eine gleichzeitige Zufuhr zu der Mischkammer (200) von Flüssigkeit und dehydriertem Futter ohne Kontakt zwischen der Flüssigkeit und dem dehydrierten Futter bei der Verteilungszone (700) und/oder der Öffnung (211) zu ermöglichen.

9. Gerät zur Zubereitung (500) nach dem vorhergehenden Anspruch, wobei die Mittel zur Versorgung der Mischkammer (200) mit dehydriertem Futter eine Zufuhrschraube (420) umfassen, die zwischen den Mitteln zum Lagern von dehydrierten Futter und dem Zufuhranschluss angeordnet ist.

10. Gerät zur Zubereitung (500) nach dem vorhergehenden Anspruch, wobei die Verteilungszone (700) geneigte Wände (710) umfasst, die angeordnet sind, um das dehydrierte Futter zu zentrieren und es zur Öffnung (211) der Mischkammer (200) in der ersten Position zu führen.

11. Gerät zur Zubereitung (500) nach einem der vorhergehenden Ansprüche, umfassend Mittel zum Lagern eines Nahrungsergänzungsmittels, insbesondere in flüssiger Form.

12. Gerät zur Zubereitung (500) nach dem vorhergehenden Anspruch, wobei das Nahrungsergänzungsmittel in einer entfernbaren Patrone (610) enthalten ist.

13. Gerät zur Zubereitung (500) nach dem vorhergehenden Anspruch, wobei die entfernbare Patrone (610) einen Kolben (620) umfasst, und wobei das Gerät Schubmittel umfasst, die angeordnet sind, um den Kolben (620) um eine vorgegebene Strecke zu bewegen.

14. Gerät zur Zubereitung (500) nach einem der Ansprüche 9 bis 10 abhängig von Anspruch 7, wobei die entfernbare Patrone (610) einen Auslass umfasst, der über der Öffnung (211) der Mischkammer (200) in der ersten Position angeordnet ist, und wobei der Auslass der entfernbaren Patrone (610), der Zufuhranschluss und das stromabwärtige Ende (811) des Flüssigkeitsversorgungskanals (810) versetzt und voneinander entfernt sind, um eine gleichzeitige Versorgung der Mischkammer (200) mit Nahrungsergänzungsmittel und Flüssigkeit und/oder dehydriertem Futter ohne Kontakt zwischen dem Nahrungsergänzungsmittel und der Flüssigkeit und/oder dem dehydrierten Futter in der Verteilungszone (700) und/oder der Öffnung (211) zu ermöglichen.

## Claims

1. Apparatus (500) for preparing feed for animals, comprising:
- means for storing a dehydrated feed,
- means for storing a liquid such as water,
- a mixing chamber (200) arranged to receive a dehydrated feed portion and a liquid portion,
- mixing means arranged in a movable manner in the mixing chamber (200) for mixing the dehydrated feed portion and the liquid portion in order to form a feed ration in paste form,
- a consumption container (400) arranged to receive the feed ration,
**characterised in that**:
- the mixing chamber (200) comprises an opening (211),
- the mixing chamber (200) is mounted movable relative to the preparation apparatus (500), so as to move from a first position, or mixing position, in which the opening (211) is facing a zone for distributing (700) dehydrated feed and liquid, to a second position, or distribution position, in which the opening (211) is facing the consumption container (400).

2. Apparatus for preparing (500) according to the preceding claim, wherein the opening (211), when the mixing chamber (200) is in the first position, is located in the upper portion of the mixing chamber (200), and wherein the opening (211), when the mixing chamber (200) is in the second position, is located in the lower portion of the mixing chamber (200).

3. Apparatus for preparing (500) according to one of the preceding claims, wherein the mixing chamber (200) is mobile in rotation about an axis of rotation (150).

4. Apparatus for preparing (500) according to one of the preceding claims, wherein the mixing means comprise a mixing blade (100).

5. Apparatus for preparing (500) according to the preceding claim in its dependency with claim 3, wherein the mixing blade (100) is mobile in rotation about the same axis of rotation as the mixing chamber (200).

6. Apparatus for preparing (500) according to the preceding claim, wherein the mixing blade (100) is arranged to guide the ingredients from the mixing chamber (200) to an end of the mixing chamber (200) opposite the opening (211) when it pivots along a first direction of rotation, and wherein the mixing blade (100) is arranged to guide the ingredients from the mixing chamber (200) to the opening (211) when it pivots along a second direction of rotation.

7. Apparatus for preparing (500) according to one of the preceding claims, comprising a channel for supplying (810) with liquid, with a downstream end (811) arranged above the opening (211) when the mixing chamber (200) is in the first position, in such a way as to cause the liquid to flow in the mixing chamber (200) without contact with the distribution zone (700) and/or the opening (211).

8. Apparatus for preparing (500) according to the preceding claim, comprising means for supplying the mixing chamber (200) with dehydrated feed, with a mouth for supplying with dehydrated feed arranged to cause dehydrated feed to fall through the opening (211) into the mixing chamber (200) in the first position, and in which the mouth for supplying and the downstream end (811) of the channel for supplying (810) with liquid are offset and separated from one another in such a way as to allow for a simultaneous supply of the mixing chamber (200) with liquid and with dehydrated feed, without contact between the liquid and the dehydrated feed on the distribution zone (700) and/or the opening (211).

9. Apparatus for preparing (500) according to the preceding claim, wherein the means for supplying the mixing chamber (200) with dehydrated feed comprise a feed screw (420) arranged between the means for storing the dehydrated feed and the mouth for supplying.

10. Apparatus for preparing (500) according to the preceding claim, wherein the distribution zone (700) comprises tilted walls (710) arranged to recentre the dehydrated feed and guide it to the opening (211) of the mixing chamber (200) in the first position.

11. Apparatus for preparing (500) according to one of the preceding claims, comprising means for storing a food supplement, in particular in liquid form.

12. Apparatus for preparing (500) according to the preceding claim, wherein the food supplement is contained in a removable cartridge (610).

13. Apparatus for preparing (500) according to the preceding claim, wherein the removable cartridge (610) comprises a piston (620), and wherein the apparatus comprises means for pushing, arranged to displace the piston (620) by a predetermined distance.

14. Apparatus for preparing (500) according to one of claims 9 to 10 in their dependency with claim 7, wherein the removable cartridge (610) comprises an outlet arranged above the opening (211) of the mixing chamber (200) in the first position, and wherein the outlet of the removable cartridge (610), the mouth for supplying and the downstream end (811) of the channel for supplying (810) with liquid are offset and separated from one another, in such a way as to allow for a simultaneously supply of the mixing chamber (200) with food supplement and with liquid and/or with dehydrated feed, without contact between the food supplement and the liquid and/or the dehydrated feed on the distribution zone (700) and/or the opening (211).
